# EUROPÄISCHE PATENTSCHRIFT

(11) **EP 1 929 174 B1**
(45) Veröffentlichungstag und Bekanntmachung des Hinweises auf die Patenterteilung: **15.04.2009**
(21) Anmeldenummer: 06791602.3
(22) Anmeldetag: 21.08.2006
(51) Int. Cl.: F16H 3/091, F16H 3/12, F16H 37/04

(54) **AUTOMATISIERTES KFZ-SCHALTGETRIEBE UND VERFAHREN ZUR SCHALTSTEUERUNG EINES AUTOMATISIERTEN KFZ-SCHALTGETRIEBES**
MOTOR VEHICLE AUTOMATIC GEARBOX AND METHOD FOR THE OPERATION THEREOF
BOITE DE VITESSES AUTOMATISEE DE VEHICULE A MOTEUR ET PROCEDE POUR COMMANDER UNE BOITE DE VITESSES AUTOMATISEE DE VEHICULE A MOTEUR

(30) Priorität: 30.09.2005 DE 102005046894
(43) Veröffentlichungstag der Anmeldung: 11.06.2008
(73) Patentinhaber: ZF Friedrichshafen AG, 88038 Friedrichshafen (DE)
(72) Erfinder: HEINZELMANN, Karl-Fritz, 88074 Meckenbeuren (DE)
(86) Internationale Anmeldenummer: PCT/EP2006/008220
(87) Internationale Veröffentlichungsnummer: WO 2007/039021

(56) Entgegenhaltungen:
- EP-A- 1 517 066
- EP-A2- 0 800 949
- EP-A2- 1 127 731
- DE-A1- 19 859 458
- GB-A- 2 274 493

## Beschreibung

Die Erfindung betrifft ein automatisiertes Kfz-Schaltgetriebe, mit einer Eingangswelle, einer Ausgangswelle und mehreren selektiv schaltbaren Gängen, wobei die Eingangswelle über eine ein- und ausrückbare Motorkupplung mit einem Antriebsmotor in Verbindung steht.

Die Erfindung betrifft des Weiteren ein Verfahren zur Schaltsteuerung eines automatisierten Kfz-Schaltgetriebes, das eine Eingangswelle, eine Ausgangswelle und mehrere selektiv schaltbare Gänge aufweist, und bei dem die Eingangswelle über eine ein- und ausrückbare Motorkupplung mit einem Antriebsmotor in Verbindung steht, wobei bei einem Schaltvorgang zwischen einem eingelegten Lastgang und einem einzulegenden Zielgang die Motorkupplung geschlossen bleibt.

Automatisierte Schaltgetriebe finden in Kraftfahrzeugen sowohl im PKW-Bereich als auch im Nutzfahrzeugbereich zunehmend Anwendung, da sie bei relativ geringem Gewicht, kompakten Abmessungen und einem hohen Getriebewirkungsgrad aufgrund der automatisiert ablaufenden Schaltvorgänge einen hohen Bedienungskomfort aufweisen sowie einen geringen Kraftstoffverbrauch der betreffenden Kraftfahrzeuge ermöglichen.

Nachteilig an automatisierten Schaltgetrieben ist jedoch die bauartbedingte Unterbrechung des Kraftflusses zwischen dem Antriebsmotor und dem mit der Ausgangswelle des Getriebes verbundenen Achsantrieb während eines Gangwechsels, die dadurch entsteht, dass die Motorkupplung vorübergehend geöffnet ist und sich das Schaltgetriebe zeitweilig in seiner Neutralstellung befindet. Hierdurch kann bei einer Hochschaltung, insbesondere bei einer Zughochschaltung während des Befahrens einer Steigungsstrecke, eine unerwünschte Verzögerung des Kraftfahrzeugs, sowie bei einer Rückschaltung, insbesondere bei einer Schubrückschaltung während des Befahrens einer Gefällstrecke, eine unerwünschte Beschleunigung des Kraftfahrzeugs auftreten. Dies führt im Allgemeinen zu einer Verzögerung und zu einem unkomfortablen Ablauf des Schaltvorgangs.

Es ist daher besonders bei Nutzfahrzeugen bekannt, bei Schaltvorgängen zur Verkürzung der Kraftunterbrechung die Synchronisierung des jeweils einzulegenden Gangs bei einer Hochschaltung durch eine Getriebebremse zu beschleunigen oder bei geschlossener Motorkupplung durch einen Eingriff in die Motorsteuerung mittels einer Motorbremse zu unterstützen, welches jedoch mit einem Mehraufwand für die Zusatzeinrichtungen verbunden ist.

Die vorliegende Erfindung bezieht sich daher sowohl auf einfache automatisierte Schaltgetriebe, die vorwiegend in Personenkraftwagen und leichten Transportern verwendet werden, als auch auf so genannte Gruppengetriebe, die aus mehreren seriell gekoppelten Teilgetrieben bestehen und vorwiegend in schwereren Nutzfahrzeugen zur Anwendung kommen. So ist beispielsweise in der DE 100 51 354 A1 ein Bereichsgruppengetriebe beschrieben, das aus einem einfachen Hauptgetriebe in Vorgelegebauweise und einer diesem nachgeschalteten Bereichsgruppe, die als einfacher Planetenradsatz ausgebildet ist, besteht.

Vor diesem Hintergrund liegt der vorliegenden Erfindung die Aufgabe zugrunde, ein automatisiertes Schaltgetriebe der eingangs genannten Art auf einfache und Platz sparende Weise derart weiterzubilden, dass bei einem Schaltvorgang die Unterbrechung der Zugkraft vermieden werden kann. Dokument GB 2274493 offenbart ein gattungsgemäßes Kfz -Schalgetriebe.
Des Weiteren soll ein Verfahren zur Schaltsteuerung eines derartigen automatisierten Schaltgetriebes angegeben werden.

Die Lösung der Aufgabe das Schaltgetriebe betreffend besteht in Verbindung mit den Merkmalen des Oberbegriffs des Anspruchs 1, darin, dass eine steuerbare Reibungskupplung als Lastschaltkupplung zur bedarfsweise direkten Verbindung der Eingangswelle mit der Ausgangswelle vorgesehen ist.

Durch das zumindest teilweise Schließen der Lastschaltkupplung kann bei einem Schaltvorgang zwischen zwei Gängen, die maximal einen Direktgang (Übersetzung i = 1) beinhalten, bei geschlossener Motorkupplung das von dem Antriebsmotor über die Motorkupplung auf die Eingangswelle übertragene Drehmoment größtenteils übernommen werden. Dadurch wird die Schaltkupplung des eingelegten Lastgangs entlastet und kann zum Auslegen des Lastgangs somit weitgehend lastfrei geöffnet werden. Ebenso kann dadurch der einzulegende Zielgang weitgehend lastfrei synchronisiert und nachfolgend eingelegt werden. Mittels der erfindungsgemäßen Getriebestruktur können die Schaltvorgänge, sofern sie keinen Overdrive-Gang (i < 1) beinhalten, somit ohne eine Unterbrechung des Kraftflusses als Teillastschaltung durchgeführt werden. Dadurch wird eine unerwünschte Verzögerung oder Beschleunigung des Kraftfahrzeugs vermieden, so dass der Schaltvorgang insgesamt schneller und komfortabler ablaufen kann.

Aufgrund der im Antriebsstrang aufrecht erhaltenen Lastspannung werden zudem Lastschläge und Schwingungen vermieden, welches mit verringertem Verschleiß an kritischen Bauteilen des Antriebsstrangs und einem insgesamt höheren Fahrkomfort verbunden ist. Sonstige, für Schaltvorgänge zur Reduzierung der Eingangsdrehzahl des Schaltgetriebes vorgesehene Vorrichtungen, wie eine Getriebebremse oder eine Motorbremse, können entfallen beziehungsweise eingespart werden.

Vorteilhafte Ausgestaltungen und Weiterbildungen des erfindungsgemäßen Schaltgetriebes sind in den Unteransprüchen 2 bis 5 angegeben.

Die Lastschaltkupplung ist bevorzugt als eine druckgesteuerte Lamellenkupplung ausgebildet, da diese Bauart kompakte Abmessungen ermöglicht und, insbesondere bezüglich des übertragbaren Drehmomentes, besonders einfach und exakt steuerbar ist.

Bei der weit verbreiteten Ausführungsform des Schaltgetriebes als Vorgelegegetriebe, bei dem die Eingangswelle und die Ausgangswelle kolinear, also axial hintereinander auf einer gemeinsamen geometrischen Achse angeordnet sind, ist die Lastschaltkupplung vorteilhaft am ausgangsseitigen Ende der Ausgangswelle angeordnet. Dies erfordert relativ geringe bauliche Veränderungen an einem vorhandenen Serien-Schaltgetriebe und kann dadurch realisiert werden, dass die Ausgangswelle als Hohlwelle ausgebildet ist, und die Eingangswelle in koaxialer Anordnung innerhalb der Ausgangswelle bis an das ausgangsseitige Ende der Ausgangswelle verlängert ist.

Ist das Schaltgetriebe dagegen als ein Gruppengetriebe mit einer einem Hauptgetriebe nachgeschalteten Bereichsgruppe ausgebildet, so kann die Lastschaltkupplung zweckmäßig sogar innerhalb des Gehäuses der Bereichsgruppe angeordnet werden. Hierdurch betreffen die baulichen Veränderungen im Wesentlichen die Bereichsgruppe, wogegen an dem Hauptgetriebe nur die Eingangswelle und die Ausgangswelle, wie zuvor beschrieben, geändert werden müssen.

Bei der üblichen Ausbildung der Bereichgruppe als ein einfacher Planetenradsatz mit einem mit der Ausgangswelle des Hauptgetriebes verbundenen Sonnenrad und einem mit der Ausgangswelle der Bereichsgruppe verbundenen Planetenträger, der zwischen einer untersetzten Langsamfahrstufe L und einer direkten Schnellfahrstufe S schaltbar ist, kann die Lastschaltkupplung zwischen der Eingangswelle des Hauptgetriebes und dem Sonnenrad der Bereichsgruppe antriebstechnisch angeordnet sein. In diesem Fall können die Schaltungen des Hauptgetriebes in der vorbeschriebenen Weise ohne Unterbrechung der Kraftübertragung durchgeführt werden.

Eine so genannte Bereichsschaltung, bei der in der Bereichsgruppe zwischen der Langsamfahrstufe L und der Schnellfahrstufe S umgeschaltet wird, ist dann allerdings mit einer Zug- bzw. Schubkraftunterbrechung verbunden. Um dies zu vermeiden, kann die Lastschaltkupplung bei einer derartigen Bereichsgruppe vorteilhaft auch zwischen der Eingangswelle des Hauptgetriebes und dem Planetenträger der Bereichsgruppe angeordnet sein.

Die Lösung der Aufgabe das Verfahren zur Schaltsteuerung betreffend besteht in Verbindung mit den Merkmalen des Oberbegriffs des Anspruchs 6 darin, dass bei einem Schaltvorgang zwischen zwei maximal einen Direktgang beinhaltenden Gängen (i > = 1) vor dem Auslegen des Lastgangs eine zwischen der Eingangswelle und der Ausgangswelle angeordnete, als steuerbare Reibungskupplung ausgebildete Lastschaltkupplung zur Drehmomentübernahme zumindest teilweise geschlossen wird, dann der Lastgang ausgelegt wird, nachfolgend der Zielgang synchronisiert und eingelegt wird, und abschließend die Lastschaltkupplung wieder vollständig geöffnet wird.

Hierbei wird die Lastschaltkupplung aufgrund der im Vergleich zur wirksamen Übersetzung des Lastgangs zumeist direkteren Übersetzung fast immer im Schlupfzustand gesteuert. Eine Ausnahme davon bildet nur ein Schaltvorgang von dem Direktgang (i = 1) in einen kleineren Gang (i > 1), bei dem die Lastschaltkupplung zur Übernahme des Drehmomentes vollständig geschlossen werden kann.

Nach dem Auslegen des Lastgangs kann die Synchronisierung des Zielgangs durch eine Änderung des übertragbaren Drehmoments der Lastschaltkupplung durchgeführt oder zumindest unterstützt werden, indem die Lastschaltkupplung zur Synchronisierung des Zielgangs bei einem Hochschaltvorgang weiter geschlossen und bei einem Rückschaltvorgang weiter geöffnet wird. Durch das weitere Schließen der Lastschaltkupplung wird die Belastung des Antriebsmotors erhöht und damit der eingangsseitige Triebstrang verzögert. Durch das weitere Öffnen der Lastschaltkupplung wird der Antriebsmotor entlastet und damit der eingangsseitige Triebstrang mittels des hochdrehenden Antriebsmotors beschleunigt. Aufgrund einer derartigen Unterstützung der Synchronisierung können übliche Synchronisiermittel, wie beispielsweise den Schaltkupplungen zugeordnete Reibringsynchronisiereinrichtungen, aufgrund der geringeren Belastung kompakter dimensioniert oder gegebenenfalls ganz eingespart werden.

Zur Verdeutlichung der Erfindung sind der Beschreibung zwei Zeichnungen mit Ausführungsbeispielen beigefügt. In diesen zeigt
- Fig. 1: eine erste Ausführungsform des automatisierten Schaltgetriebes gemäß der Erfindung in einer schematischen Darstellung und
- Fig. 2: eine zweite Ausführungsform eines erfindungsgemäßen automatisierten Schaltgetriebes in einer schematischen Darstellung.

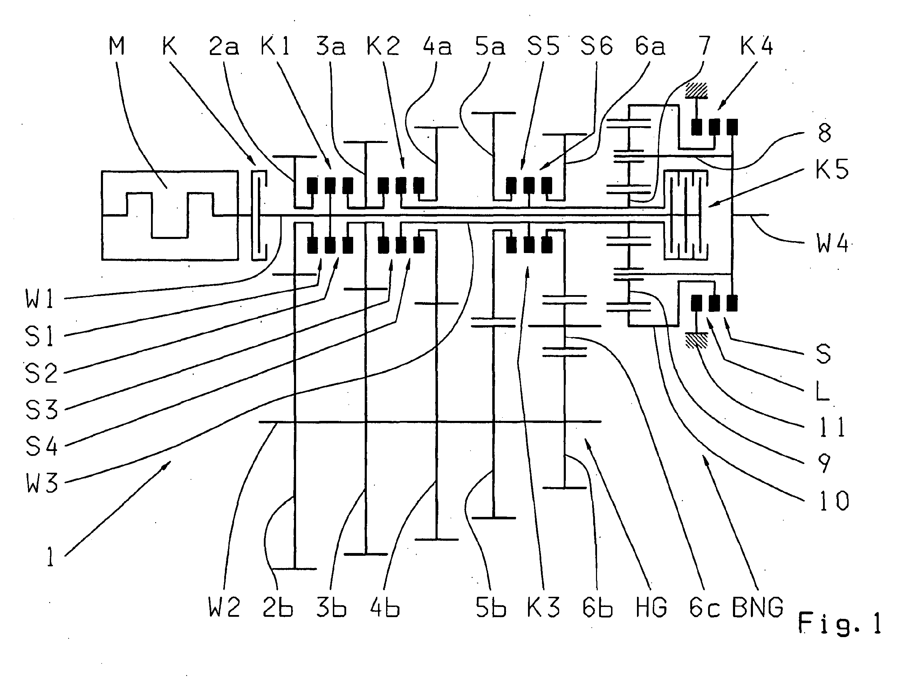

Ein automatisiertes Schaltgetriebe 1 gemäß Fig. 1 ist als ein Gruppengetriebe mit einem Hauptgetriebe HG und einer diesem nachgeschalteten Bereichsgruppe BNG ausgebildet. Das Hauptgetriebe HG, das vier Vorwärtsgänge und einen Rückwärtsgang aufweist, ist mit einer Eingangswelle W1, einer parallel dazu angeordneten Vorgelegewelle W2, und einer kolinear beziehungsweise koaxial zu der Eingangswelle W1 angeordneten Ausgangswelle W3 versehen. Dabei ist die Ausgangswelle W3 als Hohlwelle ausgebildet und die Eingangswelle W1 zentral innerhalb der Ausgangswelle W3 bis an das ausgangsseitige Ende der Ausgangswelle W3 beziehungsweise des Hauptgetriebes HG verlängert.

Die Eingangswelle W1 des Hauptgetriebes HG steht eingangsseitig über eine aus- und einrückbare Motorkupplung K mit einem als Verbrennungsmotor ausgebildeten Antriebsmotor M in Verbindung. Getriebeintern ist die Eingangswelle W1 über eine erste Schaltkupplung K1 einerseits in der Schaltstellung S1 mit dem Losrad 2a eines ersten Zahnradpaares 2a, 2b koppelbar, wodurch aufgrund der festen Verbindung des Festrades 2b mit der Vorgelegewelle W2 eine Triebverbindung zwischen der Eingangswelle W1 und der Vorgelegewelle W2 herstellbar ist.

Alternativ dazu kann die Eingangswelle W1 mittels der ersten Schaltkupplung K1 auch andererseits in der Schaltstellung S2 mit dem Losrad 3a eines zweiten Zahnradpaares 3a, 3b gekoppelt werden.

Durch die Schaltung einer zweiten Schaltkupplung K2 in die Schaltstellung S3 ist das Losrad 3a mit der Ausgangswelle W3 koppelbar, so dass in diesem Fall (bei in der Schaltstellung S2 befindlichen ersten Schaltkupplung K1) eine direkte Verbindung der Eingangswelle W1 mit der Ausgangswelle W3 hergestellt und damit der als Direktgang (i = 1) konzipierte vierte Vorwärtsgang eingelegt ist.

Der nächst kleinere dritte Vorwärtsgang wird durch das Schalten der ersten Schaltkupplung K1 in die Schaltstellung S1 und das Schalten der zweiten Schaltkupplung K2 in die Schaltstellung S3 eingelegt, wobei der Kraftfluss von der Eingangswelle W1 über die Zahnradpaare 2a, 2b und 3a, 3b in die Ausgangswelle W3 erfolgt.

In ähnlicher Weise ergeben sich die übrigen Gänge in der Reihenfolge zweiter Vorwärtsgang, erster Vorwärtsgang und Rückwärtsgang bei in der Schaltstellung S1 befindlichen ersten Schaltkupplung K1 durch das Schalten der zweiten Schaltkupplung K2 in die Schaltstellung S4, durch das Schalten der dritten Schaltkupplung K3 in die Schaltstellung S5 beziehungsweise durch das Schalten der dritten Schaltkupplung K3 in die Schaltstellung S6, wobei die erforderliche Drehrichtungsumkehr bei dem Rückwärtsgang durch das zwischen dem zugeordneten Losrad 6a und dem betreffenden Festrad 6b angeordneten Zwischenrad 6c bewirkt wird.

Die dem Hauptgetriebe HG ausgangsseitig nachgeordnete Bereichsgruppe BNG ist als ein einfacher Planetenradsatz mit einem Sonnenrad 7, mehreren auf einem Planetenträger 8 drehbar gelagerten und mit dem Sonnenrad 7 in Verzahnungseingriff stehenden Planetenrädern 9, sowie mit einem mit den Planetenrädern 9 in Verzahnungseingriff stehenden Hohlrad 10.

Das Sonnenrad 7 dient als Eingangselement der Bereichsgruppe BNG und ist daher drehfest auf der Ausgangswelle W3 des Hauptgetriebes HG angeordnet. Der Planetenträger 8 dient als Ausgangselement der Bereichsgruppe BNG und ist daher starr mit der Ausgangswelle W4 der Bereichsgruppe BNG verbunden. Das Hohlrad 10 steht mit dem Kupplungskorb einer vierten Schaltkupplung K4 in Verbindung, die selektiv zur Schaltung einer Langsamgangstufe L mit dem Gehäuse 11 und zur Schaltung einer direkten Schnellgangstufe S mit dem Planetenträger 8 verbindbar ist. In der Langsamfahrstufe L wälzen sich die Planetenräder 9 mit entsprechender Untersetzung der Drehzahl des Planetenträgers 8 zwischen dem rotierenden Sonnenrad 7 und dem arretierten Hohlrad 10 ab. In der Schnellfahrstufe S laufen alle Bauteile des Planetengetriebes aufgrund der Koppelung des Sonnenrades 10 mit dem Planetenträger 8 starr mit der Drehzahl des Sonnenrades 7 um.

Erfindungsgemäß ist bei diesem Getriebe 1 nun eine Lastschaltkupplung K5 zwischen der Eingangswelle W1 und der Ausgangswelle W3 des Hauptgetriebes HG vorgesehen, die bevorzugt als Lamellenkupplung ausgebildet ist und in der Ausführung nach Fig. 1 Platz sparend innerhalb der Bereichsgruppe BNG zwischen der hierzu verlängerten Eingangswelle W1 des Hauptgetriebes HG und dem Sonnenrad 7 angeordnet ist.

Hierdurch können Schaltvorgänge innerhalb des Hauptgetriebes HG bei geschlossener Motorkupplung K als Teillastschaltung, also ohne Zug- oder Schubkraftunterbrechung durchgeführt werden, indem bei einem Schaltvorgang zwischen einem eingelegten Lastgang und einem einzulegenden Zielgang zunächst die Lastschaltkupplung K5 im Schlupfbetrieb soweit geschlossen wird, dass das von der Motorkupplung K übertragene Drehmoment größtenteils unmittelbar von der Lastschaltkupplung K5 von der Eingangswelle W1 auf die Ausgangswelle W3 übertragen wird. Danach kann der Lastgang weitgehend lastfrei ausgelegt und nachfolgend der Zielgang synchronisiert sowie eingelegt werden. Dabei kann das Synchronisieren durch eine entsprechende Verstellung der Lastschaltkupplung K5, also durch weiteres Schließen bei einer Hochschaltung und durch weiteres Öffnen bei einer Rückschaltung zumindest unterstützt werden.

Nach dem Einlegen des Zielgangs wird die Lastschaltkupplung K5 wieder vollständig geöffnet. Trotz aller Vorteile ist bei der Anordnung nach Fig.1 allerdings nachteilig, dass eine Bereichsschaltung innerhalb der Bereichsgruppe BNG, also ein Umschalten zwischen der Langsamfahrstufe L und der Schnellfahrstufe S, nach wie vor mit einer Unterbrechung des Kraftflusses verbunden ist.

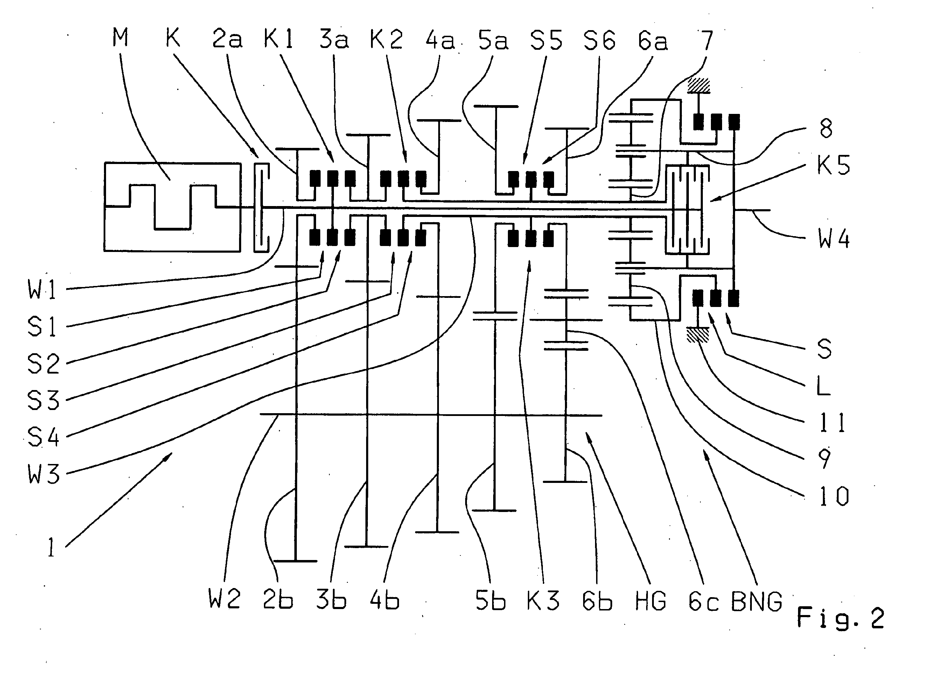

Zur Vermeidung dieses Nachteils ist in der zweiten Ausführungsform des automatisierten Schaltgetriebes 1 gemäß Fig.2 bei sonst gleicher Ausbildung und Anordnung des Hauptgetriebes HG und der Bereichsgruppe BNG die Lastschaltkupplung K5 innerhalb der Bereichsgruppe BNG antriebstechnisch nunmehr zwischen der Eingangswelle W1 des Hauptgetriebes HG und dem Planetenträger 8 sowie damit mit der mit diesem Planetenträger 8 verbundenen Ausgangswelle W4 der Bereichsgruppe BNG angeordnet. Dadurch sind nun auch die Schaltvorgänge, die eine Bereichsschaltung beinhalten, mittels der Lastschaltkupplung K5 vollständig als Teillastschaltungen durchführbar.

### Bezugszeichen

- 1: Automatisiertes Schaltgetriebe
- 2a: Losrad
- 2b: Festrad
- 3a: Losrad
- 3b: Festrad
- 4a: Losrad
- 4b: Festrad
- 5a: Losrad
- 5b: Festrad
- 6a: Losrad
- 6b: Festrad
- 6c: Zwischenrad
- 7: Sonnenrad
- 8: Planetenträger
- 9: Planetenrad
- 10: Hohlrad
- 11: Gehäuse

- BNG: Bereichsgruppe
- HG: Hauptgetriebe
- i: Übersetzungsverhältnis
- K: Motorkupplung
- K1: (erste) Schaltkupplung
- K2: (zweite) Schaltkupplung
- K3: (dritte) Schaltkupplung
- K4: (vierte) Schaltkupplung
- K5: Lastschaltkupplung
- L: Schaltstellung (von K4), Langsamgangstufe (von BNG)
- M: Antriebsmotor
- S: Schaltstellung (von K4), Schnellgangstufe (von BNG)
- S1: Schaltstellung (von K1)
- S2: Schaltstellung (von K1)
- S3: Schaltstellung (von K2)
- S4: Schaltstellung (von K2)
- S5: Schaltstellung (von K3)
- S6: Schaltstellung (von K3)
- W1: Eingangswelle (von HG)
- W2: Vorgelegewelle (von HG)
- W3: Ausgangswelle (von HG)
- W4: Ausgangswelle (von BNG)

## Patentansprüche

1. Automatisiertes Kfz-Schaftgetriebe, mit einer Eingangswelle, einer Ausgangswelle und mehreren selektiv schaltbaren Gängen, wobei die Eingangswelle über eine ein- und ausrückbare Motorkupplung mit einem Antriebsmotor in Verbindung steht und eine steuerbare Reibungskupplung als Lastschaltkupplung (K5) zur bedarfsweise direkten Verbindung der Eingangswelle (W1) mit der Ausgangswelle (W3, W4) vorgesehen ist, **dadurch gekennzeichnet, dass** die Lastschaltkupplung (K5) bei einer kolinearen Anordnung der Eingangswelle (W1) und der Ausgangswelle (W3) am ausgangsseitigen Ende der Ausgangswelle (W3) angeordnet ist, dass hierzu die Ausgangswelle (W3) als Hohlwelle ausgebildet ist, und dass die Eingangswelle (W1) in koaxialer Anordnung innerhalb der Ausgangswelle (W3) bis an das ausgangsseitige Ende der Ausgangswelle (W3) verlängert ist.

2. Schaltgetriebe nach Anspruch 1, **dadurch gekennzeichnet, dass** die Lastschaltkupplung (K5) bei einer einem Hauptgetriebes (HG) nachgeschalteten Bereichsgruppe (BNG) innerhalb des Gehäuses (11) der Bereichsgruppe (BNG) angeordnet ist.

3. Schaltgetriebe nach Anspruch 2, **dadurch gekenntzeichnet**, das die Lastschaltkupptung (K5) bei einer als einfacher Planetenradsatz mit einem mit der Ausgangswelle (W3) des Hauptgetriebes (HG) verbundenen Sonnenrad (7) und einem mit der Ausgangswelle (W4) der Bereichsgruppe (BNG) verbundenen Planetenträger (8) zwischen der Eingangswelle (W1) des Hauptgetriebes (HG) und dem Sonnenrad (7) der Bereichsgruppe (BNG) angeordnet ist.

4. Schaltgetriebe nach Anspruch 2, **dadurch gekennzeichnet, dass** die Lastschaltkupplung (K5) bei einer als einfacher Planetenradsatz mit einem mit der Ausgangswelle (W3) des Hauptgetriebes (HG) verbundenen Sonnenrad (7) und einem mit der Ausgangswelle (W4) der Bereichsgruppe (BNG) verbundenen Planetenträger (8) zwischen der Eingangswelle (W1) des Hauptgetriebes (HG) und dem Planetenträger (8) der Bereichsgruppe (BNG) angeordnet ist.

5. Schaltgetriebe nach Anspruch 1, **dadurch gekennzeichnet, dass** die Lastschaltkupplung (K5) als eine druckgesteuerte Lamellenkupplung ausgebildet ist.

6. Verfahren zur Schaltsteuerung eines automatisierten Kfz-Schaltgetriebes, das eine Eingangswelle, eine Ausgangswelle und mehrere selektiv schaltbare Gänge aufweist, und bei dem die Eingangswelle über eine ein- und ausrückbare Motorkupplung mit einem Antriebsmotor in Verbindung steht, wobei bei einem Schaltvorgang zwischen einem eingelegten Lastgang und einem einzulegenden Zielgang die Motorkupplung während des Gangwechsels geschlossen bleibt, dass bei einem Schaltvorgang zwischen zwei maximal einen Direktgang beinhaltenden Gängen (i > = 1) vor dem Auslegen des Lastgangs eine zwischen der Eingangswelle (W1) und der Ausgangswelle (W3, W4) angeordnete, als steuerbare Reibungskupplung ausgebildete Lastschaltkopplung (K5) zur Drehmomentübernahme zumindest teilweise geschlossen wird, dann der Lastgang ausgelegt wird, nachfolgend der Zielgang synchronisiert und eingelegt wird, und dass abschließend die Lastschaltkupplung (K5) wieder vollständig geöffnet wird, **dadurch gekennzeichnet, dass** die Synchronisierung des Zielgangs durch eine Änderung des übertragbaren Drehmoments der Lastschaltkupplung (K5) zumindest unterstützt wird.

7. Verfahren nach Anspruch 6, **dadurch gekennzeichnet, dass** die Lastschaltkupplung (K5) bei einem Hochschaltvorgang zur Synchronisierung des Zielgangs weiter geschlossen wird.

8. Verfahren nach Anspruch 6, **dadurch gekennzeichnet, dass** die Lastschattkupplung (K5) bei einem Rückschaftvorgang zur Synchronisierung des Zielgangs weiter geöffnet wird.

## Claims

1. Automated motor vehicle shift transmission, having an input shaft, an output shaft and a plurality of gears which can be shifted in a selective fashion, with the input shaft being connected by means of an engine clutch, which can be engaged and disengaged, to a drive engine and with a controllable friction clutch being provided as a powershift clutch (K5) for directly connecting the input shaft (W1) to the output shaft (W3, W4) as required, **characterized in that** the powershift clutch (K5) is arranged, with a collinear arrangement of the input shaft (W1) and output shaft (W3), at the output-side end of the output shaft (W3), **in that**, for this purpose, the output shaft (W3) is embodied as a hollow shaft, and **in that** the input shaft (W1), arranged coaxially within the output shaft (W3), is lengthened up to the output-side end of the output shaft (W3).

2. Shift transmission according to Claim 1, **characterized in that** the powershift clutch (K5) is arranged, with a range group (BNG) connected downstream of a main transmission (HG), within the housing (11) of the range group (BNG).

3. Shift transmission according to Claim 2, **characterized in that** the powershift clutch (K5) is arranged, with a design of the range group (BNG) as a single planetary gear set with a sun gear (7), which is connected to the output shaft (W3) of the main transmission (HG), and a planet carrier (8), which is connected to the output shaft (W4) of the range group (BNG), between the input shaft (W1) of the main transmission (HG) and the sun gear (7) of the range group (BNG).

4. Shift transmission according to Claim 2, **characterized in that** the powershift clutch (K5) is arranged, with a design of the range group (BNG) as a single planetary gear set with a sun gear (7), which is connected to the output shaft (W3) of the main transmission (HG), and a planet carrier (8), which is connected to the output shaft (W4) of the range group (BNG), between the input shaft (W1) of the main transmission (HG) and the planet carrier (8) of the range group (BNG).

5. Shift transmission according to Claim 1, **characterized in that** the powershift clutch (K5) is embodied as a pressure-controlled multiplate clutch.

6. Method for shift control in an automated motor vehicle shift transmission which has an input shaft, an output shaft and a plurality of gears which can be shifted in a selective fashion, and in which the input shaft is connected by means of an engine clutch, which can be engaged and disengaged, to a drive engine, wherein, during a shift process between an engaged power gear and a target gear to be engaged, the engine clutch remains closed during the gear change, wherein, during a shift process between two gears which comprise a maximum of one direct gear (i >= 1), a powershift clutch (K5) which is arranged between the input shaft (W1) and the output shaft (W3, W4) and which is embodied as a controllable friction clutch is at least partially closed for a transfer of torque before the power gear is disengaged, then the power gear is disengaged, and the target gear is subsequently synchronized and engaged, and wherein, finally, the powershift clutch (K5) is completely opened again, **characterized in that** the synchronization of the target gear is at least assisted by means of a change in the torque which can be transmitted by the powershift clutch (K5).

7. Method according to Claim 6, **characterized in that** the powershift clutch (K5) is closed further during an upshift process in order to synchronize the target gear.

8. Method according to Claim 6, **characterized in that** the powershift clutch (K5) is opened further during a downshift process in order to synchronize the target gear.

## Revendications

1. Boîte de vitesses automatisée de véhicule, avec un arbre d'entrée, un arbre de sortie et plusieurs rapports pouvant être passés au choix, l'arbre d'entrée étant relié à un moteur d'entraînement par l'intermédiaire d'un embrayage de moteur pouvant être embrayé et débrayé et un embrayage par frottement commandable étant directement relié sous la forme d'un embrayage commandé sous charge (K5) pour relier directement l'arbre d'entrée (W1) à l'arbre de sortie (W3, W4) en fonction des besoins, **caractérisée en ce que** l'embrayage commandé sous charge (K5) est disposé au niveau de l'extrémité de sortie de l'arbre de sortie (W3) pour un agencement colinéaire de l'arbre d'entrée (W1) et de l'arbre de sortie (W3), que l'arbre de sortie (W3) prend la forme pour ce faire d'un arbre creux et que l'arbre d'entrée (W1) est rallongé dans l'agencement coaxial à l'intérieur de l'arbre de sortie (W3) jusqu'à l'extrémité côté sortie de l'arbre de sortie (W3).

2. Boîte de vitesses selon la revendication 1, **caractérisée en ce que** l'embrayage commandé sous charge (K5) est disposé à l'intérieur du carter (11) du groupe de gammes (BNG) pour un groupe de gammes (BNG) succédant à la boîte de vitesses principale (HG).

3. Boîte de vitesses selon la revendication 2, **caractérisée en ce que** l'embrayage commandé sous charge (K5) est disposé entre l'arbre d'entrée (W1) de la boîte de vitesses principale (HG) et la roue solaire (7) du groupe de gammes (BNG) pour un groupe de gammes (BNG) prenant la forme d'un jeu de roues solaires simple avec une roue solaire (7) reliée à l'arbre de sortie (W3) de la boîte de vitesses principale (HG) et pour un porte-planétaire (8) relié à l'arbre de sortie (W4) du groupe de gammes (BNG).

4. Boîte de vitesses selon la revendication 2, **caractérisée en ce que** l'embrayage commandé sous charge (K5) est disposé entre l'arbre d'entrée (W1) de la boîte de vitesses principale (HG) et le porte-planétaire (8) du groupe de gammes (BNG) pour une roue solaire (7) reliée à l'arbre de sortie (W3) de la boîte de vitesses principale (HG) prenant la forme d'un jeu de roues solaires simple et pour un porte-planétaire (8) relié à l'arbre de sortie (W4) du groupe de gammes (BNG) .

5. Boîte de vitesses selon la revendication 1, **caractérisée en ce que** l'embrayage commandé sous charge (K5) prend la forme d'un embrayage à lamelles commandé par pression.

6. Procédé de passage de vitesses d'une boîte de vitesses automatisée de véhicule qui comporte un arbre d'entrée, un arbre de sortie et plusieurs rapports pouvant être passés au choix, et dans lequel l'arbre d'entrée est relié à un moteur d'entraînement par l'intermédiaire d'un embrayage de moteur pouvant être embrayé et débrayé, dans lequel en cas de changement de vitesse entre un rapport en charge passé et un rapport cible à passer, l'embrayage de moteur reste fermé pendant le changement de rapport, dans lequel un embrayage commandé sous charge (K5) disposé entre l'arbre d'entrée (W1) et l'arbre de sortie (W3, W4) et prenant la forme d'un embrayage de frottement commandable en cas de changement de vitesse entre deux rapports contenant au maximum un rapport direct (i > = 1), avant de retirer la vitesse en charge, est fermé au moins en partie pour la transmission du couple, puis le rapport en charge est retiré, avant que le rapport cible ne soit synchronisé et passé, et que l'embrayage commandé sous charge (K5) ne soit de nouveau entièrement ouvert, **caractérisé en ce que** la synchronisation du rapport cible est soutenue au moins par une variation du couple transmissible de l'embrayage commandé sous charge (K5).

7. Procédé selon la revendication 6, **caractérisé en ce que** l'embrayage commandé sous charge (K5) est davantage fermé pour un processus de changement de vitesse à une vitesse supérieure en vue de synchroniser la vitesse cible.

8. Procédé selon la revendication 6, **caractérisé en ce que** l'embrayage commandé sous charge (K5) est davantage ouvert en cas de processus de rétrogradation en vue de synchroniser la vitesse cible.
